# EUROPEAN PATENT SPECIFICATION

(11) **EP 3 103 166 B1**
(45) Date of publication and mention of the grant of the patent: **16.03.2022**
(21) Application number: 15743534.8
(22) Date of filing: 03.02.2015
(51) Int. Cl.: H01S 3/067, H01S 3/094, H01S 3/10, H01S 3/11, H01S 3/16, H01S 3/00

(54) **HIGH POWER ULTRASHORT PULSED FIBER LASER**
ULTRAKURZER GEPULSTER HOCHLEISTUNGSFASERLASER
LASER À FIBRE À IMPULSIONS ULTRACOURTES DE FORTE PUISSANCE

(30) Priority: 03.02.2014 US 201461935234 P
(43) Date of publication of application: 14.12.2016
(73) Proprietor: IPG Photonics Corporation, Oxford, Massachusetts 01540 (US)
(72) Inventor: SAMARTSEV, Igor, Oxford, MA 01540 (US); JENKET, Bruce, Oxford, MA 01540 (US); YUSIM, Alex, Oxford, MA 01540 (US); GAPONTSEV, Valentin, Oxford, MA 01540 (US)
(74) Representative: Kobiako von Gamm, Iouri
(86) International application number: PCT/US2015/014248
(87) International publication number: WO 2015/117128

(56) References cited:
- WO-A2-2011/160234
- US-A1- 2008 144 673
- US-A1- 2012 217 375
- US-A1- 2012 262 781
- US-A1- 2013 177 031
- US-A1- 2013 177 031
- US-A1- 2013 188 661
- US-A1- 2013 250 982

## Description

### BACKGROUND OF THE DISCLOSURE

### Field of the disclosure

This disclosure relates to ultrashort pulsed fiber lasers. In particular, the disclosure relates to compact ultrashort mode-locked fiber lasers with adjustable pulse duration scheme.

### Prior art

The high power pulsed fiber laser systems find widespread use in a present day commercial industries and in different areas of science and technology. Applicability of pulsed fiber lasers in the industrial applications depends on average and peak power of laser pulses, output energies, beam quality, wavelength, efficiency, reliability, stability, robustness and compactness.

The development of compact high power fiber lasers is as important as the evolution of electro-optical characteristics of these lasers. The compactness is an essential step towards the overall goal of deploying advanced high power laser systems at space-limited locations where power, size, and weight are primary concerns. The compact high power fiber lasers operating in a continuous wave or pulsed mode, with the latter being the subject matter of the current disclosure, are critical factors in the successful development of better solutions for widely ranging, but individually highly specific, applications.

An ultrashort pulsed laser is a laser that emits pulses from sub picoseconds in duration to tens of picoseconds in duration and, like many other laser configurations, is widely used in cutting, welding and other conventional applications. Additionally, an ultrashort pulsed fiber laser has specific application including glass cutting, creating via hole in printed circuit boards, generating precise holes in fuel injectors, micromachining, and ophthalmology, etc. For these applications, a precise pulse energy and peak power is required in order to achieve the required performance.

The pulsed kW-MW-power fiber lasers are commonly configured with an architecture having a fiber-based master-oscillator-power-amplifier ("MOPA"). In this configuration, the master oscillator generates laser pulses and the fiber amplifier amplifies these pulses to high output power levels. The pulse amplification is limited by onset of optical nonlinearities. In order to extract more energy by the ultrashort pulses from the amplifier the chirped pulse amplification is used. In this method, the pulses are stretched in time via dispersion in order to reduce the pulse peak power. The pulse can be stretched to pulse durations as long as 10s of nanoseconds from some sub-picoseconds. After the amplification, the pulse duration is typically restored (compressed) to its initial values. Typically, both chirping and compressing are realized by overly dimensioned bulk elements. An example of an ultrashort pulsed fiber laser can be found in US 2013/177031 A1.

A need therefore exists for a compact ultrashort pulsed high power fiber laser with compactly-configured pulse chirping and compressing components.

For some applications, the pulse duration has to be adjusted in a fast manner. An example of this is using a sub picoseconds pulse for one processing step and then picoseconds pulse for the next step which requires switching between machining steps at a fast pace. Another example is a readjustment of the pulse duration to original pulse duration for changing laser conditions. This could be a change in peak power of the pulses changing the amount of nonlinearity in the fiber amplifier and the requirement for compensation for the dispersion induced by the peak power change.

A chirped FBG can be used for this fast switching. A linearly chirped FBG can induce a linear chirp along the pulse. By adjusting the length of the FBG, it is possible to change dispersion of the grating. A known method for tuning the pulse duration in real time is the temperature adjustment of a grating. However, the speed of such tuning is limited by the temperature control loop. Another method of tuning the length of a fiber Bragg grating is to mechanically stretch the grating. This can be done by a motor actuator. This again is limited by the speed of the mechanical actuator. A faster tuning method is to use a piezo electric transducer. Unfortunately, the piezo has a limited displacement range and the application has been limited to using a nonlinearly chirped FBG for limited pulse duration adjustment - primarily nonlinear dispersion compensation.

Therefore a further need exists for a high power pulsed fiber MOPA configuration with a piezo-based actuator pulse duration adjustment scheme configured to stretch a linearly chirped FBG at a distance greater than that of the known schemes.

The ability to deliver high-intensity substantially diffraction-limited pulsed laser beams to destinations that may lack accessibility cannot be considered without a nod to the issue of the overall laser compactness. Fiber delivery is desirable since it is not always practical to locate the entire laser systems with seeds, preamplifiers, pump sources, electronics and other indispensable laser system components in close proximity to the desired destination. The majority of laser applications require a high degree of maneuverability of a laser light source. In these applications, typically a passive delivery fiber guides MOPA amplified diffraction limited pulsed beams to a processing laser head which is relatively small, light-weight and provided with guiding optics that focus the beam at the desired location.

The technological challenge with using fibers in fiber high power fiber lasers and particularly pulsed lasers is a combination of kW-MW high peak power that is associated with a relatively low threshold of non-linear effects including self-phase modulation. Typically non-linear effects limit power scaling of a fiber laser configured to emit a diffraction-limited beam. Well known to one of ordinary skill in the laser arts two general approaches are heavily used to combat the inset of nonlinear effects: 1) enlarged core cross-section of an active fiber, i.e., fiber which has the core doped with ions of rare earth elements, and 2) fiber length reduction.

Accordingly, a further need exists for a high power single mode ("SM") pulsed fiber laser provided with a compact beam delivery assembly taking advantage of active fibers with a multimode ("MM") core which is configured to support substantially only a single fundamental mode and be end pumped.

### SUMMARY OF THE DISCLOSURE

The above identified needs are satisfied by the presently disclosed high power SM ultrashort pulsed fiber laser as defined in claim 1, having multiple components designed so as to contribute to the overall compactness, high peak power of signal light and ultrashort pulses with adjustable duration.

The disclosed laser system features a fiber booster which functions simultaneously as both amplifier and signal light delivery fibers. With the fiber booster extending over free space between a main console, which houses all peripheral components from a seed laser to preamplifier to electronics to pump assemblies, the disclosed laser head is very compact and light.

The disclosed system is provided with a compact pulse stretcher and pulse compressor. The pulse stretcher is configured with a flexible mount supporting a chirped fiber Bragg grating and receiving a piezoelectric element which is configured to flex the mount that thus has a great flexure range.

The increased range of the mount's flexure allows the use of a linearly chirped fiber Bragg grating. With the latter, it is possible to compress pulses to its original pre-chirped duration and even shorter. The compressor is configured as a volume Bragg grating which largely contributes to the compactness of the laser head.

The disclosed laser employs an end pumping technique in which pump light is delivered by a pump light delivery fiber, which also extends over free space, and coupled in the terminal end of the fiber booster in a direction counter to the propagation direction of signal light. This is realized by a reflector mounted to the laser head and configured to redirect the pump light in the counter-propagation direction. At the same time, the reflector is provided with an opening allowing amplified signal light to propagate further down the light path in the propagation direction within the laser head without losses.

### BRIEF DESCRIPTION OF THE DRAWINGS

The above and other features and advantages of the disclosure will become more readily apparent from the following specific in conjunction with the drawings, in which:
FIG. 1 is a view of the disclosed high power ultrashort pulsed laser system;
FIG. 2 a diagrammatic optical schematic of the source of light of the system of FIG. 1;
FIG. 3 is an orthogonal view of a pulse stretcher shown in FIG. 2;
FIG. 4 is a sectional view of the pulse stretcher of FIG. 3
FIG. 5 is the desired FBG spectrum in reflection;
FIG. 6 a computer generated stimulation illustrating the operation of the disclosed pulse stretcher of FIGs. 3 and 4;
FIG. 7 is a sectional view of laser head of the laser system of FIG. 1;
FIG. 8 is an enlarge diagrammatic view of a region of the laser head denoted as A in FIG. 7;
FIG. 9 is a sectional view of the A region in FIG. 7;
FIG. 10 is a side view of the A region in FIG. 7; and
FIG. 11 is a diagrammatic view of the modified region A of FIG. 7.

### SPECIFIC DESCRIPTION

Reference will now be made in detail to the preferred embodiments of the disclosure. Wherever possible, same or similar reference numerals are used in the drawings and the description to refer to the same or like parts or steps. The drawings are in very simplified form and are not precise to scale.

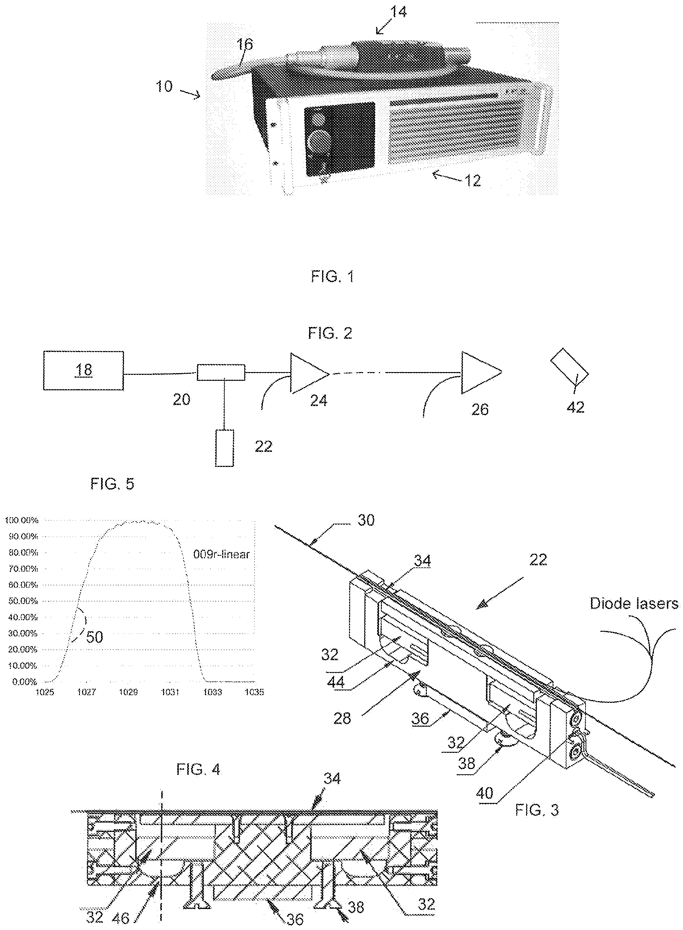

FIG. 1 shows the disclosed pulsed fiber laser 10 configured with a main console 12 which houses, among others, a source of single transverse mode (SM) ultrashort pulses of linearly polarized (LP) signal light. The laser 10 further includes a laser head with beam-guiding optics, and a fiber booster extending over free space between console 12 and laser head 14 within a flexible cable 16. The use of the fiber booster configured only with a light-emitter doped fiber without a customary passive delivery output fiber reduces the effective fiber length compared to many known systems. This is important since the shortened fiber wavelength has a higher threshold of induced nonlinear effects.

FIG. 2 illustrates a highly diagrammatic optical architecture of fiber laser 10 which, as typical for ultrashort pulsed fiber lasers, has a master oscillator power fiber amplifier configuration ("MOPFA"). The master oscillator 18 is configured either as an actively mode-locked fiber laser, or preferably as passively mode-locked fiber laser with a semiconductor absorber mirror (SESAM) and mounted in main console 12 to output SM LP sub-nanosecond laser pulses. One or more fiber preamplifiers 24 are also mounted in console 12 and operative to amplify these pulses. The main amplification is realized by a fiber booster 26 whose output power is limited only by the onset of optical nonlinearities.

In order to extract more energy by the ultrashort pulses, a pulse stretcher 22 is coupled between seed 16 and preamplifier 24 within console 12, as disclosed in greater detail below. Finally the pulses are compressed by an optical compressor 42, which is mounted in laser head 14 (FIG. 1), and operative to compress the stretched pulses to original picosecond or femtosecond pulse durations, as will be discussed in somewhat greater detail below.

Referring to FIGs. 3 and 4, tunable pulse stretcher 22 utilized in the configuration of FIGs. 1 and 2, includes a housing enclosing a mechanical flexure mount 28 that holds a chirped fiber Bragg grating ("FBG") 30. A piezoelectric 32 is received in a nest 44, which is provided in mount 28, in position to optimize the stretching of FBG 30 about a pivot point. Such a configuration induces a great change in the FBG's length over the range of piezo operation and allows using a linearly chirped FBG to tune the pulse duration. In this manner the pulse duration can be tuned form 100 fm to 100 psec with switching time as short as microseconds. The use of a linearly chirped FBG allows compression of pulses to their original or even shorter duration.

It is known that a pulse shape of the compressed pulse affects its duration. It is also known that fiber nonlinearities such as self-phase modulation ("SPM") prevent full transform limited pulse compression using a pulse compression with linear dispersion compensation. Parabolic pulse shapes that mimic the spectral broadening by SPM can be compressed even in the presence of SPM. The desired parabolic pulse shape is therefore necessary to achieve transform limited when significant nonlinearity is present. The FBG 30 with appropriate apodization profile can generate such pulse shapes. One of the proposed techniques is the use of spatial light modulator in configurations of FIGs. 1-2, which is bulky. Here, the technique includes a plurality of diode lasers operating at different wavelengths and pumping respective regions of FBG 30, which is doped with suitable light emitters, by means of a side pumping technique as shown in FIG. 5. The other possibility is the use of a single diode in combination with a plurality of micro electromechanical systems or optical witches ("MEMS") in the configurations shown in FIGs. 1-2.

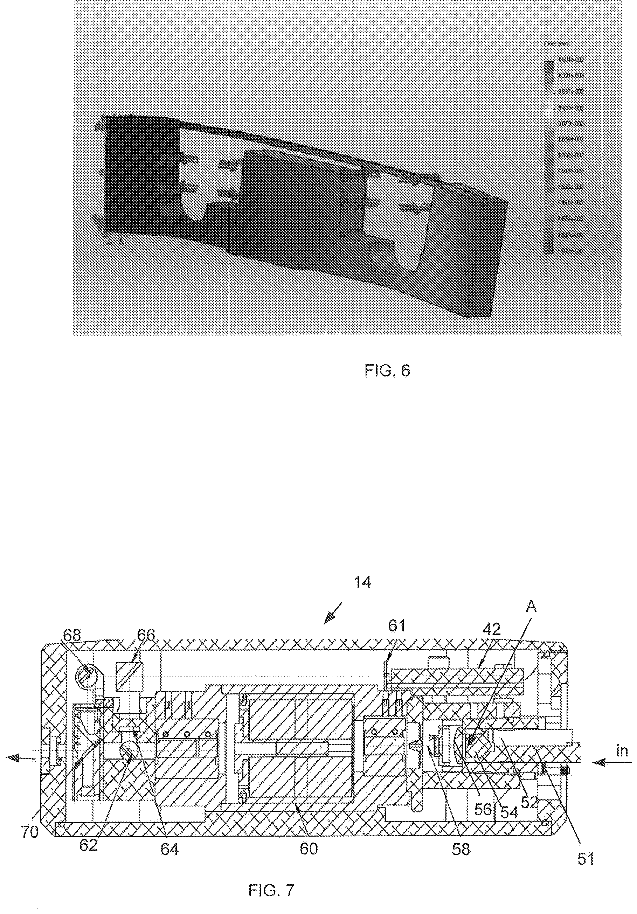

Returning to FIGs. 3 and 4, when the charge is applied to piezoelectric 32, it stretches urging against the periphery of nest 44. As a result, mount 28 flexes about a point 46 of FIG. 4 increasing the length of FBG 30. Having an additional nest 44 receiving its piezoelectric which operates simultaneously with the other one, mount 28 is operative to arch which even further increases the length of FBG 30. This becomes more readily apparent looking at the simulation in illustrated in FIG. 6.

The top of mount 28 is configured with a tray 34 receiving FBG 30. The spaced regions of FBG 30 are fixed at respective predetermined locations by any suitable means. Provided mostly for calibration purposes, mount 28 supports a thermoelectric element 36 controlled by a temperature transducer 40. Fasteners 38 provide mounting of mount 28 to the housing.

The mount 28 is preferably made from aluminum, but can be of any other flexible material. For some applications, the pulse duration has to be adjusted in a fast manner. An example of this is using a sub picoseconds pulse for one processing step and then picoseconds pulse for the next step switching between machining steps at a fast pace. Correctly selecting the material of mount 28, it is possible to stretch the mount at a frequency rate reaching high kHz levels.

Referring to FIG. 7, portable laser head 14 of the inventive configuration of FIGs. 1-2 is configured with a housing which on its input/upstream end includes a ferrule 52 receiving downstream ends of respective pump light delivery fiber and fiber booster placed on a heat sink 51. To prevent the high power density of the amplified signal light with peak powers reaching MW levels, a silica-based termination block 54 is coupled to the downstream fiber ends. A spherical mirror 56, as disclosed below in detail, is configured to reflect pump light back in the counter-propagation direction into the downstream end of the fiber booster. The mirror 56 includes a central opening dimensioned to be traversed by the amplified signal light without introducing losses. The amplified signal light is further propagates through a lens system 58 and isolator 60, which is configured to minimize propagation of backreflected signal light towards the amplifying stages.

An upstream mirror 62 redirects the incident signal light to a beam splitter 66 which in turn beams the signal light towards compressor 42. The compressor 42 is configured as a volume Bragg grating. Finally, the compressed pulses of signal light are sequentially incident on mirrors 68 and 70 before exiting the output port of laser head 16.

The pulses of signal light are linearly polarized. In order to exit laser head 16 and particularly propagate through beam splitter 66, a polarization system is configured to change the polarity of forward propagating signal light. Designed specifically for 1030 nm wavelength, the polarization system is configured with ½ and ¼ wave plates 64 and 61, respectively, configured to change the polarity of the compressed signal light to be opposite from the polarity of chirped signal light. Alternatively, instead of the wave plates, a Faraday circulator can be implemented in the illustrated schematic and is, in fact, advantageous to all other wavelengths.

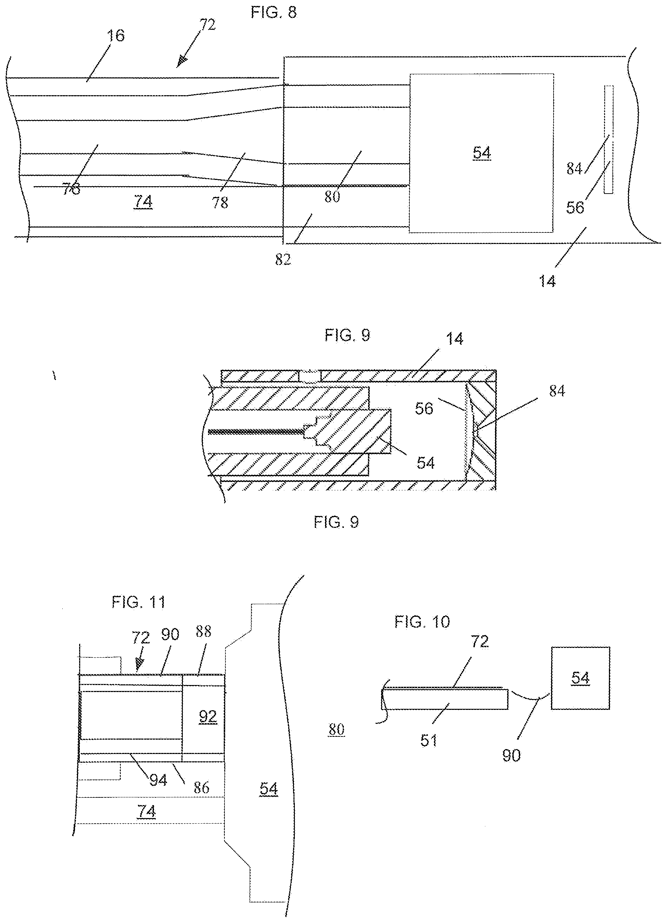

FIGs. 8 and 9 illustrate the downstream ends of respective fiber booster 72 and pump light delivery fiber or fibers 74. The fiber booster 72 may be configured with two spliced to one another portions, but preferably is a continuous splice-less body. The outer diameter of fiber booster portions may be uniform or may include a relatively long upstream fiber portion and a relatively large downstream fiber rod portion with a tapered portion bridging upstream and downstream portions. The MM core of booster 72 has a uniformly-dimensioned input region 76, tapered region 78 and another uniformly dimensioned amplifying region 80 with a cross-section larger than that of input region 76. The input region 76 of the MM core is configured to support a fundamental mode with the same mode field diameter as the single mode of signal light delivered from the seed and preamplifier stages. As a consequence, no higher order modes are excited upon coupling of the SM signal light into input core region 76 of the MM core. The tapered region adiabatically expands signal light towards the amplifying core region so that the fundamental mode gradually expands without however high order modes excitation.

While the major length portions of respective fiber booster 72 and pump light delivery fiber 74 extend through cable 16, their respective end portions are received in laser head 14 and rest on a heat sink 51 (FIG. 7). The terminal ends of respective booster and pump light delivery fiber are fused to termination block 54. In use, pump light is emitted from end portion 82, propagates in the propagation direction through block 54 and is finally reflected from mirror 56. The mirror 56 is constructed with such a curved reflecting surface that the redirected pump light is guided in the counter propagation direction through the same block 54 and into the terminal end of fiber booster 72. Effective absorption of the reflected pump light within relatively large amplifying fiber rod portion of booster 72 allows the entire fiber booster to be about 30 cm long, if necessary, and avoid generation of nonlinearities even at high peak power levels. The amplified signal light then propagates through termination block 54 and traverses an opening 84 in mirror 56 (or, alternatively, through mirror 56 configured without the opening) to be further guided along laser head 14 as explained in reference to FIG. 7.

The fiber core is doped across its entire cross-section with one or more rare-earth element. Preferably, in light of industrial trends, the dopant of choice is often ytterbium (Yb³⁺). The amplifying core region 80 may be configured with a NA substantially equal to or higher than 0.1. Furthermore, the entire length of the core is structured to have about 0.65² of its central area overlapped by a fundamental mode, which thus leaves a small peripheral area of the core 26 - a zone where HOMs and/or spontaneous emission can be amplified - not overlapped by the FM.

But amplification in the peripheral area is however largely suppressed by configuring a pump source such that it emits pump light with a numerical aperture at most matching that of core region 80, but preferably smaller than that. As a consequence, the fundamental mode is enclosed within the pump light which thus has a size at least as large as that of the fundamental mode along an entire length of the MM core of booster 72. The opening angle of the tapered core region 78 is controllably selected to provide decoupling of at least some unabsorbed pump light before it enters core region 76.

Referring to FIG. 10, in the disclosed counter-pumping scheme, the fusion region between fiber booster 72 and block 54 expander is typically under even higher temperatures than the rest of the booster since the pump light is coupled into the end region of booster 72 active fiber through this region. In addition, the terminal end 90 of fiber booster 72 does not lie on heat sink 51 (FIG. 7), which together with elevated temperatures make the bond between the fused surfaces particularly vulnerable.

Turning to FIG. 11, to reinforce the bond between end fiber region 90 and block 54, a MM passive fiber 92 is inserted between bock 54 and fiber region 90 and has a diameter matching that of amplifying core region 80 of fiber booster 72. The pump delivery fiber 74 is still in direct contact with block 54. The reflected pump light is caught within passive fiber 92 and coupled into core region 80 of fiber booster 72.

Under certain circumstances it is desirable to provide the MM core of booster 72 with a larger area that receives the pump light. This can be accomplished by providing a cladding 86 of booster 72 with a ring 94 doped with Fluorine. The core of passive fiber 92 substantially matches the diameter of ring 94. Since there is no absorption in passive fiber 92, its bond with block 54 is rarely compromised.

The disclosed Yb fiber laser 10 may operate at an average power varying between 1.5 W to above 30 W and a peak power above 5 MW. The pulse energy may exceed 100 µJ and be as low as 5 µJ. The beam quality ranges between 1.2 and 1.5. The pulse duration covers a 100 fs to 100 psec interval, and a pulse repetition rate can reach 3000 kHz and higher.

Although the present disclosure has been described in terms of the disclosed example, numerous modifications and/or additions to the above-disclosed embodiments would be readily apparent to one skilled in the laser arts without departing however from the scope of the following claims.

## Claims

1. An ultrashort pulsed fiber laser (10), comprising:
a fiber booster (72) extending over free space and having a light-emitter-doped multimode, MM, core (76, 78, 80) which is configured to guide sub-nanosecond pulses of single mode, SM, linearly polarized signal light in a propagation direction;
a pump provided with a pump light delivery fiber (74) which is configured to guide pump light in the propagation direction and coextends with the fiber booster (72) over the free space;
a portable laser head (14) receiving downstream regions of the fiber booster (72) and the pump light delivery fiber (74), respectively; and
a flexible sleeve surrounding the fiber booster (72) and the pump light delivery fiber (74) over the free space,
wherein the portable laser head (14) is configured to:
redirect the pump light in a counter-propagation direction so that the redirected pump light is coupled into a downstream end (80) of the MM core (76, 78, 80),
output amplified signal light in the propagation direction in substantially a single fundamental mode; and
a linearly chirped fiber Bragg grating, FBG, (30) upstream from and coupled to the fiber booster (72); and
a tunable pulse stretcher (22) supporting the linearly chirped FBG (30) and operable to induce changes in a length of the FBG (30), wherein the tunable pulse stretcher (22) includes a flexure mount (28) which supports the FBG (30), and a piezoelectric actuator (32) mounted to the flexure mount, so as to controllably tune a pulse duration of the signal light in a desired pulse duration range.

2. The ultrashort pulsed fiber laser of claim 1, wherein the tunable pulse stretcher (22) includes the flexure mount (28) which supports the FBG (30), and the piezoelectric actuator (32) mounted to the flexure mount (28) is configured to produce a stroke to controllably arch the flexible mount (28) about its flexure point (46) over the desired pulse duration range from about 100 fs to about 100 psec.

3. The ultrashort pulsed fiber laser of claim 1 further comprising:
a main console (12) spaced upstream from the portable laser head (14) and enclosing the FBG (30) and tunable pulse stretcher (22), and
a fiber seed laser (18) mounted in the main console (12) and having an output fiber spliced to an upstream end of the FBG (30), the fiber seed laser (18) being operative to emit the sub-nanosecond pulses of single mode, SM, linearly polarized signal light in the propagation direction.

4. The ultrashort pulsed fiber laser of claim 2, wherein the mount (28) is configured with at least one U-shaped nest (44) receiving the piezoelectric actuator (32), the nest (44) being smaller than a length of the piezo actuator (32) in a stretched position thereof, so that when the piezo actuator (32) urges against a periphery of the nest (44) in response to an applied charge, the flexure mount (28) arches about the flexure point (46) increasing a length of the linearly chirped FBG (30) over the stroke of the piezo actuator (32).

5. The ultrashort pulsed fiber laser of claim 4, wherein the mount (28) is configured with an additional U-shaped nest aligned with the nest (44) and receiving an additional piezo actuator (32), the piezo actuators (32, 32) being configured to actuate at least simultaneously in opposite directions
and/or
wherein the mount (28) is further configured with a fiber tray (34), which receives the linearly chirped FBG (30), and with two spaced fasteners which flank the fiber tray (34) and are coupled to respective ends of the linearly chirped FBG (30) at respective fixed locations.

6. The ultrashort pulsed fiber laser of claim 4, wherein the flexure mount (28) is configured to be capable of displacing at a frequency reaching kHz level at a distance of up to 50 mm upon applying the charge.

7. The ultrashort pulsed fiber laser of claim 3, wherein the fiber seed laser (18) is a passively mode-locked laser or actively- locked mode laser
and/or
wherein the fiber seed laser (18) is configured to emit signal light pulses at about 1064 nm wavelength with a pulse repetition reaching of up to about 3000 kHz, each pulse having duration between about a 100 fs to about 100 psec.

8. The ultrashort pulsed fiber laser of claim 3 further comprising an output passive SM fiber configured to deliver the sub-nanosecond pulses of SM signal light to an upstream core portion of the fiber booster (72), the output passive SM and fiber booster (72) having respective core regions coupled to one another and configured with respective mode field diameters which match one another so that only a fundamental mode is excited in the core region of the fiber booster (72) upon coupling of the signal light into the MM core (76, 78, 80) of the fiber booster (72)
and/or
further comprising at least one fiber preamplifier (24) mounted in the main console (12) downstream from the pulse stretcher (22).

9. The ultrashort pulsed fiber laser of claim 1, wherein the portable laser head (14) houses
a reflective element (56) spaced from the downstream regions (82, 80) of the fiber booster (72) and pump light delivery fiber (74), respectively,
a silica termination block (54) between the downstream regions (82, 80) of the fiber booster (72) and pump light delivery fiber (74) and the reflective element (56), respectively.

10. The ultrashort pulsed fiber laser of claim 9, wherein the downstream regions (80, 82) of the respective fiber booster (72) and pump light delivery fiber (74) and the reflective element (56) are directly fused to an upstream face of the silica termination block (54), the reflective element (56) being configured to reflect the pump light back into the MM core (76, 78, 80) of the fiber booster (72) in the counter-propagation direction, and having a central opening (84) dimensioned to let the signal light unobstructedly traverse the opening (84) in the propagation direction.

11. The ultrashort pulsed fiber laser of claim 9, wherein the portable laser head (14) further houses
a heat sink (51) supporting the downstream ends (80, 82) of the fiber booster (72) and pump light delivery fibers (74), respectively,
the downstream region (82) of the pump light delivery fiber (74) being directly fused to an upstream face of the termination block (54), and
an end passive fiber (92) having one end spliced to the downstream region (82) of the fiber booster (72) without losses and an opposite end fused to the upstream face of the termination block (54), the end passive fiber (92) having a length dimensioned so that the downstream region (80, 82) of the fiber booster (72) has a terminal end thereof fully supported by the heat sink (51)
and/or
wherein the laser head (14) further houses an isolator (60) located downstream from the reflective element (56) and configured to prevent propagation of backreflected signal light in the counter-propagation direction.

12. The ultrashort pulsed fiber laser of claim 1 further comprising a volume Bragg grating (42) enclosed in the laser head (14) and configured to compress pulses of the signal light chirped upstream from the fiber booster (72).

13. The ultrashort pulsed fiber laser of claim 12, further comprising a circulator based on ¼ waveplate (61, 64) and polarizer being configured to change a polarization state of the amplified chirped pulses of the signal light.

14. The ultrashort pulsed fiber laser of claim 1, wherein the MM core (76, 78, 80) of the fiber booster (72) is configured with an input fiber portion and fiber rod output portion (80).

15. The ultrashort pulsed fiber laser of claim 14, wherein the input fiber portion (76) of the MM core (76, 78, 80) is configured with a uniformly dimensioned input region running into a mode-transforming tapered region (78) which runs into the fiber rod output portion (80) which has a cross-section larger than that of the input fiber portion (76).

16. The ultrashort pulsed fiber laser of claim 3 further comprising a plurality of diode lasers mounted in the main console (12) and configured to selectively emit radiation at respective different wavelengths to side pump the linearly chirped FBG (30) which is doped with one or more ions of rare earth elements.

## Patentansprüche

1. Ultrakurzpulsfaserlaser (10), der umfasst:
einen Faserverstärker (72), der über den freien Raum verläuft und einen mit einem Lichtemitter dotierten Mehrmodenkern, MM-Kern, (76, 78, 80) aufweist, der dafür konfiguriert ist, Subnanosekundenimpulse eines linear polarisierten Einmodensignallichts, SM-Signallichts, in einer Ausbreitungsrichtung zu leiten;
eine Pumpe, die mit einer Pumplichtspeisefaser (74) versehen ist, die dafür konfiguriert ist, Pumplicht in der Ausbreitungsrichtung zu leiten, und die zusammen mit dem Faserverstärker (72) über den freien Raum verläuft;
einen tragbaren Laserkopf (14), der auslassseitige Gebiete des Faserverstärkers (72) bzw. der Pumplichtspeisefaser (74) aufnimmt; und
eine biegsame Hülse, die den Faserverstärker (72) und die Pumplichtspeisefaser (74) über den freien Raum umgibt, wobei der tragbare Laserkopf (14) konfiguriert ist zum:
Umleiten des Pumplichts in einer zu der Ausbreitung entgegengesetzten Richtung, so dass das umgeleitete Pumplicht in ein auslassseitiges Ende (80) des MM-Kerns (76, 78, 80) gekoppelt wird,
Ausgeben von verstärktem Signallicht in der Ausbreitungsrichtung im Wesentlichen in einer einzelnen Grundmode; und
ein linear gechirptes Faser-Bragg-Gitter, FBG, (30), einlassseitig von dem Faserverstärker (72) und mit ihm gekoppelt; und einen abstimmbaren Impulsdehner (22), der das linear gechirpte FBG (30) unterstützt und dafür betreibbar ist, Änderungen einer Länge des FBG (30) zu erzeugen, wobei der abstimmbare Impulsdehner (22) eine Biegehalterung (28), die das FBG (30) stützt, und einen piezoelektrischen Aktuator (32), der in der Weise an der Biegehalterung montiert ist, dass er eine Impulsdauer des Signallichts in einem gewünschten Impulsdauerbereich steuerbar abstimmt, enthält.

2. Ultrakurzpulsfaserlaser nach Anspruch 1, wobei der abstimmbare Impulsdehner (22) die Biegehalterung (28) enthält, die das FBG (30) stützt, und wobei der an der Biegehalterung (28) montierte piezoelektrische Aktuator (32) dafür konfiguriert ist, einen Hub zu erzeugen, um die Biegehalterung (28) über den gewünschten Impulsdauerbereich von etwa 100 fs bis etwa 100 ps um ihren Biegepunkt (46) steuerbar zu wölben.

3. Ultrakurzpulsfaserlaser nach Anspruch 1, der ferner umfasst:
eine Hauptkonsole (12), die einlassseitig von dem tragbaren Laserkopf (14) beabstandet ist und das FBG (30) und den abstimmbaren Impulsdehner (22) einschließt, und
einen Faserkeimlaser (18), der in der Hauptkonsole (12) montiert ist und eine Ausgangsfaser aufweist, die mit einem einlassseitigen Ende des FBG (30) gespleißt ist, wobei der Faserkeimlaser (18) dafür betreibbar ist, die
Subnanosekundenimpulse des linear polarisierten Einmodensignallichts, SM-Signallichts, in der Ausbreitungsrichtung zu emittieren.

4. Ultrakurzpulsfaserlaser nach Anspruch 2, wobei die Halterung (28) mit wenigstens einer U-förmigen Aufnahme (44) konfiguriert ist, die den piezoelektrischen Aktuator (32) aufnimmt, wobei die Aufnahme (44) kleiner als eine Länge des Piezoaktuators (32) in einer gedehnten Position davon ist, so dass sich die Biegehalterung (28) über den Hub des Piezoaktuators (32) um den Biegepunkt (46) wölbt, was eine Länge des linear gechirpten FBG (30) erhöht, wenn der Piezoaktuator (32) in Ansprechen auf eine angelegte Ladung gegen einen Umfang der Aufnahme (44) drängt.

5. Ultrakurzpulsfaserlaser nach Anspruch 4, wobei die Halterung (28) mit einer zusätzlichen U-förmigen Aufnahme konfiguriert ist, die auf die Aufnahme (44) ausgerichtet ist und die einen zusätzlichen Piezoaktuator (32) aufnimmt, wobei die Piezoaktuatoren (32, 32) dafür konfiguriert sind, wenigstens gleichzeitig in entgegengesetzten Richtungen zu betätigen, und/oder
wobei die Halterung (28) ferner mit einer Faserablage (34), die das linear gechirpte FBG (30) aufnimmt, und mit zwei beabstandeten Befestigungselementen, die die Faserablage (34) flankieren und die an jeweils festen Orten mit jeweiligen Enden des linear gechirpten FBG (30) gekoppelt sind, konfiguriert ist.

6. Ultrakurzpulsfaserlaser nach Anspruch 4, wobei die Biegehalterung (28) so konfiguriert ist, dass sie in der Lage ist, sich bei Anlegen der Ladung mit einer Frequenz, die ein kHz-Niveau erreicht, in einer Entfernung von bis zu 50 mm zu verlagern.

7. Ultrakurzpulsfaserlaser nach Anspruch 3, wobei der Faserkeimlaser (18) ein passiv modengekoppelter Laser oder ein aktiv modengekoppelter Laser ist,
und/oder
wobei der Faserkeimlaser (18) dafür konfiguriert ist, Signallichtimpulse mit einer Wellenlänge von etwa 1064 nm mit einer Impulswiederholung, die bis zu etwa 3000 kHz erreicht, zu emittieren, wobei jeder Impuls eine Dauer zwischen etwa 100 fs bis etwa 100 ps aufweist.

8. Ultrakurzpulsfaserlaser nach Anspruch 3, der ferner eine passive SM-Ausgangsfaser umfasst, die dafür konfiguriert ist, die Subnanosekundenimpulse des SM-Signallichts in einen einlassseitigen Kernabschnitt des Faserverstärkers (72) zu speisen, wobei der passive Ausgangs-SM und der Faserverstärker (72) jeweilige Kernbereiche aufweisen, die miteinander gekoppelt sind und mit jeweiligen Modenfelddurchmessern, die in der Weise aneinander angepasst sind, dass in dem Kernbereich des Faserverstärkers (72) beim Koppeln des Signallichts in den MM-Kern (76, 78, 80) des Faserverstärkers (72) nur eine Grundmode erregt wird, konfiguriert sind,
und/oder
der ferner wenigstens einen Faservorverstärker (24) umfasst, der auslassseitig von dem Impulsdehner (22) in der Hauptkonsole (12) montiert ist.

9. Ultrakurzpulsfaserlaser nach Anspruch 1, wobei der tragbare Laserkopf (14) unterbringt:
ein reflektierendes Element (56), das von den auslassseitigen Gebieten (82, 80) des Faserverstärkers (72) bzw. der Pumplichtspeisefaser beabstandet ist,
einen Silicaabschlussblock (54) zwischen den auslassseitigen Gebieten (82, 80) des Faserverstärkers (72) bzw. der Pumplichtspeisefaser (74) des reflektierenden Elements (56).

10. Ultrakurzpulsfaserlaser nach Anspruch 9, wobei die auslassseitigen Gebiete (80, 82) des Faserverstärkers (72) bzw. der Pumplichtspeisefaser (74) und das reflektierende Element (56) mit einer einlassseitigen Fläche des Silicaabschlussblocks (54) direkt verschmolzen sind, wobei das reflektierende Element (56) dafür konfiguriert ist, das Pumplicht in der zu der Ausbreitung entgegengesetzten Richtung zurück in den MM-Kern (76, 78, 80) des Faserverstärkers (72) zu reflektieren, und eine zentrale Öffnung (84) aufweist, die in der Weise dimensioniert ist, dass sie zulässt, dass das Signallicht die Öffnung (84) in der Ausbreitungsrichtung ungehindert durchquert.

11. Ultrakurzpulsfaserlaser nach Anspruch 9, wobei der tragbare Laserkopf (14) ferner unterbringt:
eine Wärme senke (51), die die auslassseitigen Enden (80, 82) des Faserverstärkers (72) bzw. der Pumplichtspeisefasern (74) stützt,
wobei das auslassseitige Gebiet (82) der Pumplichtspeisefaser (74) direkt an eine einlassseitige Fläche des Abschlussblocks (54) geschmolzen ist, und
eine passive Endfaser (92) mit einem Ende, das ohne Verluste an das auslassseitige Gebiet (82) des Faserverstärkers (72) gespleißt ist, und mit einem gegenüberliegenden Ende, das an die einlassseitige Fläche des Abschlussblocks (54) geschmolzen ist, wobei die passive Endfaser (92) eine Länge aufweist, die so dimensioniert ist, dass das auslassseitige Gebiet (80, 82) des Faserverstärkers (72) ein Abschlussende davon aufweist, das vollständig durch die Wärmesenke (51) gestützt ist,
und/oder
wobei der Laserkopf (14) ferner einen Isolator (60) unterbringt, der sich auslassseitig von dem reflektierenden Element (56) befindet und der dafür konfiguriert ist, eine Ausbreitung des zurückreflektierten Signallichts in der zu der Ausbreitung entgegengesetzten Richtung zu verhindern.

12. Ultrakurzpulsfaserlaser nach Anspruch 1, der ferner ein Volumen-Bragg-Gitter (42) umfasst, das in dem Laserkopf (14) eingeschlossen ist und dafür konfiguriert ist, Impulse des Signallichts, die einlassseitig von dem Faserverstärker (72) gechirpt werden, zu komprimieren.

13. Ultrakurzpulsfaserlaser nach Anspruch 12, der ferner einen Zirkulator, der auf einem Lambda-Viertel-Plättchen (61, 64) beruht, und einen Polarisator, der dafür konfiguriert ist, einen Polarisationszustand der verstärkten gechirpten Impulse des Signallichts zu ändern, umfasst.

14. Ultrakurzpulsfaserlaser nach Anspruch 1, wobei der MM-Kern (76, 78, 80) des Faserverstärkers (72) mit einem Eingangsfaserabschnitt und mit einem Faserstabausgangsabschnitt (80) konfiguriert ist.

15. Ultrakurzpulsfaserlaser nach Anspruch 14, wobei der Eingangsfaserabschnitt (76) des MM-Kerns (76, 78, 80) mit einem gleichförmig dimensionierten Eingangsgebiet konfiguriert ist, das in ein abgeschrägtes Modenwandlungsgebiet (78) verläuft, das in den Faserstabausgangsabschnitt (80) verläuft, der einen größeren Querschnitt als der Eingangsfaserabschnitt (76) aufweist.

16. Ultrakurzpulsfaserlaser nach Anspruch 3, der ferner mehrere Diodenlaser umfasst, die in der Hauptkonsole (12) montiert sind und die dafür konfiguriert sind, wahlweise Strahlung mit jeweils verschiedenen Wellenlängen zu emittieren, um das linear gechirpte FBG (30), das mit einem oder mehreren Ionen von Seltenerdelementen dotiert ist, seitlich zu pumpen.

## Revendications

1. Un laser à fibre à impulsions ultra-courtes (10), comprenant :
un amplificateur à fibre (72) s'étendant sur un espace libre et ayant un noyau multimode, MM, dopé par émetteur de lumière (76, 78, 80) qui est conçu pour guider les impulsions sub-nanosecondes d'une lumière de signal monomode, SM, polarisée linéairement, dans une direction de propagation ;
une pompe munie d'une fibre de transmission de la lumière de pompage (74) qui est conçue pour guider la lumière de pompage dans
la direction de propagation et qui s'étend avec l'amplificateur à fibre (72) sur le même espace libre ;
une tête laser portable (14) recevant des régions en aval de l'amplificateur à fibre (72) et de la fibre de transmission de la lumière de pompage (74), respectivement ; et
un manchon souple entourant l'amplificateur à fibre (72) et la fibre de transmission de la lumière de pompage (74) sur l'espace libre ,
moyennant quoi la tête laser portable (14) est conçue pour :
réorienter la lumière de pompage dans une direction de propagation opposée de sorte que la lumière de pompage réorientée soit couplée dans une extrémité en aval (80) du noyau MM (76, 78, 80),
émettre une lumière de signal amplifiée dans la direction de propagation essentiellement dans un mode fondamental unique ; et
un réseau de Bragg à fibre pulsée linéairement (FGB) (30) en amont et couplé avec l'amplificateur à fibre (72) ; et
un élargisseur d'impulsions accordables (22) supportant le FGB à fibre pulsée linéairement (30) et utilisable pour induire des changements dans une longueur du FGB (30), l'élargisseur d'impulsions accordables (22) comportant un support flexible (28) qui supporte le FBG (30) et un actionneur piézoélectrique (32) monté sur le support flexible, en vue d'accorder de façon contrôlable une durée d'impulsion de la lumière de signal sur une plage de durées d'impulsions souhaitée.

2. Le laser à fibre à impulsions ultra-courtes de la revendication n°1, moyennant quoi l'élargisseur d'impulsions accordables (22) inclut le support flexible (28) qui supporte le FBG (30), et l'actionneur piézoélectrique (32) monté sur le support flexible (28) est conçu pour produire
une course en vue d'arquer de façon contrôlable le support flexible (28) autour de son point de flexion (46) sur la plage de durées d'impulsions souhaitée allant d'environ 100 fs à environ 100 psec.

3. Le laser à fibre à impulsions ultra-courtes de la revendication n°1, comprenant également :
une console principale (12) espacée en amont de la tête laser portable (14) et enfermant le FBG (30) et l'élargisseur d'impulsions accordables (22), et
un laser d'ensemencement à fibre (18) montée dans la console principale (12) et ayant une fibre de sortie épissée vers une extrémité en amont du FBG (30), le laser d'ensemencement à fibre (18) étant opérationnel pour émettre les impulsions sub-nanosecondes de la lumière de signal monomode, SM, polarisée linéairement, dans la direction de propagation.

4. Le laser à fibre à impulsions ultra-courtes de la revendication n°2, moyennant quoi le support (28) est conçu avec au moins un nid en U (44) recevant l'actionneur piézoélectrique (32), le nid (44) étant plus petit qu'une longueur de l'actionneur piézoélectrique (32) dans une position étendue de sorte que, lorsque l'actionneur piézoélectrique (32) s'appuie contre une périphérie du nid (44) en réponse à une charge appliquée, le support flexible (28) s'arque autour du point de flexion (46) augmentant une longueur du FBG à fibre pulsée linéairement (30) sur la course de l'actionneur piézoélectrique (32).

5. Le laser à fibre à impulsions ultra-courtes de la revendication n°4, moyennant quoi le support (28) est conçu avec un nid en U supplémentaire, aligné au nid (44) et recevant un actionneur piézoélectrique supplémentaire (32), les actionneurs piézoélectriques (32, 32) étant conçus pour actionner au moins
simultanément dans des directions opposées
et/ou
moyennant quoi le support (28) est également conçu avec un plateau de fibre (34) qui reçoit le FBG à fibre pulsée linéairement (30) et avec deux fixations espacées qui flanquent le plateau de fibre (34) et qui sont couplées aux extrémités respectives du FBG à fibre pulsée linéairement (30) sur des points fixes respectifs.

6. Le laser à fibre à impulsions ultra-courtes de la revendication n°4, moyennant quoi le support flexible (28) est conçu pour être capable de se déplacer à une fréquence atteignant un niveau de kHz à une distance pouvant aller jusqu'à 50 mm lors de l'application de la charge.

7. Le laser à fibre à impulsions ultra-courtes de la revendication n°3, moyennant quoi le laser d'ensemencement à fibre (18) est un laser à blocage de mode passif ou un laser à blocage de mode actif et/ou
moyennant quoi le laser d'ensemencement à fibre (18) est conçu pour émettre des impulsions de lumière de signal d'une longueur d'onde d'environ 1064 nm avec une répétition d'impulsions pouvant atteindre environ 3000 kHz, chaque impulsion ayant une durée entre 100 fs et environ 100 psec.

8. Le laser à fibre à impulsions ultra-courtes de la revendication n°3, comprenant également une fibre de sortie SM passive, conçue pour fournir
les impulsions sub-nanosecondes de la lumière de signal SM vers une partie du noyau en amont de l'amplificateur à fibre (72), la fibre de sortie SM passive et l'amplificateur à fibre (72) ayant des régions centrales respectives, mutuellement couplées, et conçues avec des diamètres de champs de modes respectifs qui sont adaptés les uns aux autres de sorte que seul un mode fondamental soit excité dans la région centrale de l'amplificateur à fibre (72) lors du couplage de la lumière du signal dans le noyau MM (76, 78, 80) de l'amplificateur à fibre (72)
et/ou
comprenant également au moins un préamplificateur à fibre (24) monté dans la console principale (12) en aval de l'élargisseur d'impulsions (22) .

9. Le laser à fibre à impulsions ultra-courtes de la revendication n°1, moyennant quoi la tête laser portable (14) loge
un élément réfléchissant (56) espacé des régions en aval (82, 80) de l'amplificateur à fibre (72) et de la fibre de transmission de la lumière de pompage (74), respectivement.
un bornier de terminaison en silice (54) entre les régions en aval (82, 80)
de l'amplificateur à fibre (72) et de la fibre de transmission de la lumière de pompage (74) et de l'élément réfléchissant (56), respectivement.

10. Le laser à fibre à impulsions ultra-courtes de la revendication n°9, moyennant quoi les régions en aval (80, 82)
de l'amplificateur à fibre respectif (72) et de la fibre de transmission de la lumière de pompage (74) et de l'élément réfléchissant (56) sont directement fusionnées vers une face en amont du bornier de terminaison en silice (54), l'élément réfléchissant (56) étant conçu pour renvoyer la lumière de pompage dans le noyau MM (76, 78, 80) de l'amplificateur à fibre (72) dans la direction de propagation opposée, et ayant une ouverture centrale (84) dimensionnée pour permettre à la lumière du signal de traverser sans entrave l'ouverture (84) dans la direction de propagation.

11. Le laser à fibre à impulsions ultra-courtes de la revendication n°9, moyennant quoi la tête laser portable (14) loge également
un puits de chaleur (51) supportant les extrémités en aval (80, 82) de l'amplificateur à fibre (72) et des fibres de transmission de la lumière de pompage (74), respectivement,
la région en aval (82) de la fibre de transmission de la lumière de pompage (74) étant directement fusionnée vers une face en amont du bornier de terminaison (54), et
une fibre passive d'extrémité (92) ayant une extrémité épissée à la région en aval (82) de l'amplificateur à fibre (72) sans pertes ainsi qu'une extrémité opposée fusionnée à la face en amont du bornier terminaison (54), la fibre passive d'extrémité (92) ayant une longueur dimensionnée de sorte que la région en aval (80, 82) de l'amplificateur à fibre (72) ait une extrémité de bornier entièrement supportée par le puits de chaleur (51)
et/ou
moyennant quoi la tête laser (14) loge également un isolateur (60) situé en aval de l'élément réfléchissant (56) et conçu pour prévenir la propagation de la lumière de signal renvoyée dans la direction de propagation opposée.

12. Le laser à fibre à impulsions ultra-courtes de la revendication n°1, comprenant également un réseau de Bragg en volume enfermé dans la tête laser (14) et conçu pour comprimer les impulsions de la lumière de signal en amont de l'amplificateur à fibre (72).

13. Le laser à fibre à impulsions ultra-courtes de la revendication n°12, comprenant également un circulateur basé sur une lame quart d'onde (61, 64) et un polariseur conçu pour
changer un état de polarisation des impulsions amplifiées comprimées de la lumière de signal.

14. Le laser à fibre à impulsions ultra-courtes de la revendication n°1, moyennant quoi le noyau MM (76, 78, 80) de l'amplificateur à fibre (72) est conçu avec une part de fibre d'entrée et une part de sortie de la tige de fibre (80).

15. Le laser à fibre à impulsions ultra-courtes de la revendication n°14, moyennant quoi la part de fibre d'entrée (76) du noyau MM (76, 78, 80) est conçue avec une région d'entrée dimensionnée uniformément, intervenant dans une région effilée de transformation des modes (78) qui circule dans la part de sortie de la tige de fibre (80), présentant une section transversale supérieure à celle de la part de fibre d'entrée (76).

16. Le laser à fibre à impulsions ultra-courtes de la revendication n°3, comprenant également une pluralité de lasers à diode montés dans la console principale (12) et conçus pour émettre de façon sélective le rayonnement à différentes longueurs d'ondes respectives pour pomper latéralement le FBG à fibre pulsée linéairement (30) qui est dopé avec un ou plusieurs ions d'éléments terrestres rares.
